# EUROPEAN PATENT APPLICATION

(11) **EP 1 803 656 A1**
(43) Date of publication of application: **04.07.2007**
(21) Application number: 06126848.8
(22) Date of filing: 21.12.2006
(51) Int. Cl.: B65D 50/04, B29C 45/00

(54) **Cap equipped with an anti-rotation security device**

(30) Priority: 28.12.2005 IT MI20052505
(71) Applicant: FABIANO, Nicola, 20090 Buccinasco MI (IT)
(72) Inventor: FABIANO, Nicola, 20090 Buccinasco MI (IT)
(74) Representative: Coppo, Alessandro

(57) **Abstract**

Cap (10) equipped with an anti-rotation security device (11) comprising at least one inner body (2) and at least one outer body (3) suitable for being at least partially fitted concentrically one on top of the other. The inner body (2) and the outer body (3) are made in a single mould.

## Description

The present invention refers to a cap and in particular a cap equipped with an anti-rotation security device to avoid the bottle or flask on which it is arranged being opened by children and a process for making it.

Caps of this type are generally formed from two bodies, an inner one and an outer one, coupled coaxially so that they can rotate. Through the interposition of parts the two bodies are allowed to rotate as a unit in one direction, to allow the bottle to be opened, whereas the outer body is allowed to rotate idly on the inner body in the other direction, thus without the possibility of the bottle opening.

These caps are used as security closures for bottles or flasks containing detergent or medicine that children must be prevented from opening.

To produce this type of cap, the two bodies are generally made individually by moulding and then assembled manually.

Every mould specially made for the production of one of two bodies requires a certain amount of technical complexity and high manufacturing costs.

In light of the above, there is clearly a need to be able to have a cap and a process for making the same, like the one according to the present invention, which allows the assembly operation of the two bodies that make it up to be eliminated.

Therefore, a purpose of the present invention is to solve the problems of the prior art, providing a cap equipped with an anti-rotation security device and a process for making it that allows the assembly operation of the constituent bodies to be eliminated.

Another purpose of the present invention is to provide a cap equipped with anti-rotation security device and a process for making it that allows at least one production mould and consequently the connected costs to be eliminated.

Finally, another purpose of the present invention is to provide a cap equipped with anti-rotation security device and a process for making it that is simple and cost-effective to make.

These and other purposes according to the present invention are accomplished by making a cap equipped with anti-rotation security device as outlined in claim 1 and a process for making it as expressed in claim 15.

Further characteristics of the cap and of the process for making it are the object of the dependent claims.

The characteristics and advantages of a cap equipped with anti-rotation security and of a process for making it according to the present invention shall become clearer from the following description, given as a non-limiting example, referring to the attached schematic drawings in which:
- figure 1 is a side elevation view of a first embodiment of the cap according to the present invention just moulded, but not yet removed from the mould;
- figure 2 is a side elevation view of the cap of figure 1 in section;
- figure 3 is a perspective view of the cap according to the present invention just moulded, but not yet removed from the mould;
- figure 4 is a side elevation view of a first embodiment of the cap according to the present invention removed from the mould;
- figure 5 is a side elevation view of the cap of figure 4 according to the present invention in section;
- figure 6 is a side elevation view of the cap according to the present invention during the removal of the mould with the outer body that is fitted onto the inner body;
- figure 7 is a side elevation view of the cap according to the present invention during the removal of the mould with the outer body that is fitted onto the inner body, in a step after the one illustrated in figure 6.

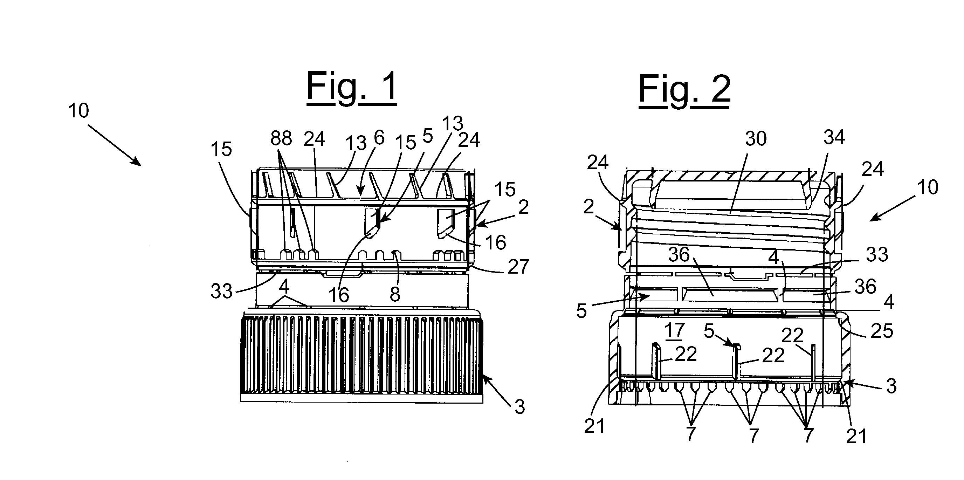

With reference to figures 1-6, a cap 10 of the type equipped with an anti-rotation security device according to the present invention is shown, wholly indicated with 10.

The cap 10, equipped with an anti-rotation security device 11, comprises at least one inner body 2 and at least one outer body 3 suitable for being at least partially fitted concentrically one on top of the other.

Advantageously according to the present invention, the inner body 2 and the outer body 3 are made in a single mould and assembled directly during removal from the mould by the thrusting action exerted on the outer body 3 and/or on the inner body 2 by a mobile element of the mould.

According to a first embodiment the inner body 2 and the outer body 3 are moulded integrally, in other words in one piece.

For this purpose, at least two connection bridges 4 are foreseen between the inner body 2 and the outer body 3 sized to tear when the cap 10 is removed from the mould.

When the cap 10 is removed from the mould, after the connection bridges 4 have been torn, the outer body 3 is fitted and assembled, automatically, on the inner body 2.

In particular, the mould for producing the cap according to the present invention is made up of at least one male part suitable for forming the inner recesses of the inner and outer body, at least one female part and at least one bushing.

During the removal of the cap 10 from the mould the bushing of the mould thrusts the outer body 3 upwards. In other words, it thrusts the outer body 3 to be fitted onto the inner body 2, after the bridges 4 have been broken.

According to the preferred embodiment shown in the figures a plurality of bridges 4 are foreseen arranged around a circumference between outer body 3 and inner body 2.

According to another embodiment of the present invention, the inner body 2 and the outer body 3 are made in a single mould, but not joined by the bridges 4.

In this case, at least two feeding points of the moulding material, which can possibly be of different colours, must be foreseen.

The outer body 3 and the inner body 2 are, however, assembled directly during removal from the mould by the thrusting action exerted on the outer body 3 and/or on the inner body 2 by the bushing of the mould.

Once the outer body 3 has been fitted and assembled on the inner body 2, in order to avoid the latter slipping away from the former, special stop means 5 are foreseen.

In particular, the stop means 5 comprise a plurality of fins 15, arranged on the outer side wall 18 of the inner body 2, suitable for interacting with an annular ridge 21 foreseen on the inner wall 17 of the outer body 3 precisely to prevent the outer body 3 slipping away from the inner body 2, from above.

The fins 15 comprise at least one tapered portion 16 suitable for making it easier to correctly assemble and position the outer body 3 on the inner body 2 during the removal of the cap 10 from the mould.

In other words, the tapered portion 18 acts to radially open out the shoulder 25 and allow it to pass to pass over the fin 15 so that such a shoulder abuts against the elastic means 6, as seen hereafter.

The stop means 5 also comprise a plurality of second fins 22 arranged on the inner side wall 17 of the outer body 3 suitable for interacting with an annular ridge 24 foreseen on the outer wall of the inner body 2 to prevent the outer body 3 slipping away from the inner body 2.

The anti-rotation security device 11 comprises a plurality of first teeth 7 arranged on the outer body 3 and a plurality of second teeth 8 arranged on the inner body 2 and elastic means 6 to take the first teeth 7 away from the second teeth 8.

Once they are assembled, the outer body 3 can slide on the inner body 2 between a rotation position of the cap 10 in which the first teeth 7 engage with the second teeth 8 and a rotation-blocking position in which the first teeth 7 are disengaged from the second teeth 8.

In other words, to open a bottle or flask on which the cap 10 according to the present invention is mounted, it is necessary to make the outer body 3 slide on the inner body 2, thus lowering the former, overcoming the resistance of the elastic means 6 until the first teeth 7 engage with the second teeth 8.

The elastic means 6 comprise a plurality of fins inclined 13 arranged along a circumference, formed from the annular ridge 24, about the inner body 2 suitable for abutting against an inner shoulder 25 of the outer body 3.

According to another advantageous aspect of the present invention the first teeth 7 and the second teeth 8 are arranged along the shaped annular ridges 27, 21.

The annular ridge 21 acts, as stated earlier, as a stop means 5, whereas the ridge 27 has an inclined portion 28 to make it easier for the outer body 3 to slide on the inner body 2 during the assembly of the cap 10, in other words during the removal of the latter from the mould.

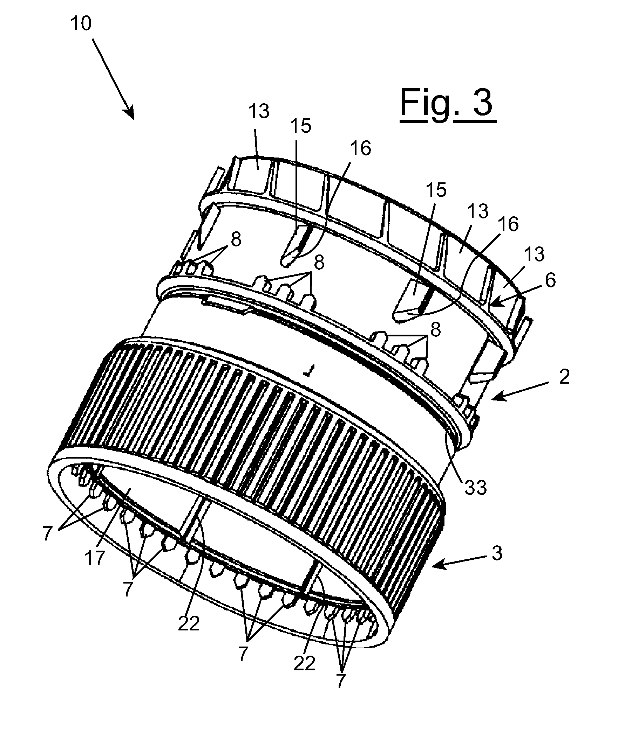

Going back to the fins 15, it should be noted that they are inclined in the radial direction, as shown in figure 3, to allow the joint rotation of the outer body 3 and of the inner body 2 in one direction and just the idle rotation of the outer body 3 on the inner body 2 in the opposite direction, interacting with the fins 22.

In other words, the fins 15, together with the fins 22 as well as acting as stop means 5, also have the function of pulling means, helping or preventing the rotation between outer body 3 and inner body 2.

According to another advantageous aspect of the present invention the inner body 2 comprises a tamper-proof band 33 and engagement means 35 for the finish or annular rib of a bottle or flask.

The engagement means 35 are formed from a plurality of ridges 36 projecting internally on the band 33 that are used to fix the cap 10 under the finish or annular rib of the bottle or of the flask.

The inner body 2 comprises in a known way an upper sealing inner annular element or tige 34 and a threading 30 suitable for engaging with a corresponding threading of the neck of the flask or of the bottle to open it or close it.

The process for making a cap 10 according to the present invention comprises at least one moulding step and at least one removal step of the moulded cap 10.

In the moulding step, the outer body 3 and the inner body 2 are made in a single mould and assembled directly during removal from the mould by the thrusting action exerted on the outer body 3 and/or on the inner body 2 by a mobile element of the same mould.

According to a first embodiment in the moulding step, the outer body 3 and the inner body 2 are moulded in one piece.

Once it has been moulded, during the step of removal of the cap 10 from the mould, the bridges 4 are broken and the outer body 3 is fitted and assembled on the inner body 2 automatically, in other words by just the opening action of some parts making up the mould.

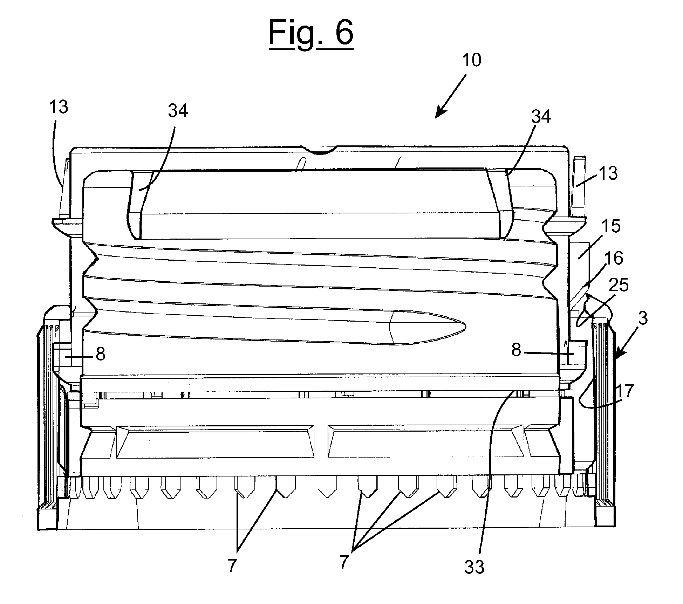

In particular, figure 6 shows one of the relative positions between outer body 3 and inner body 2 during the removal of the cap 10 from the mould, in which the bridges 4 are now torn and the shoulder 25 opens out elastically carried out by the inclined portion 16 to get past the fin 15.

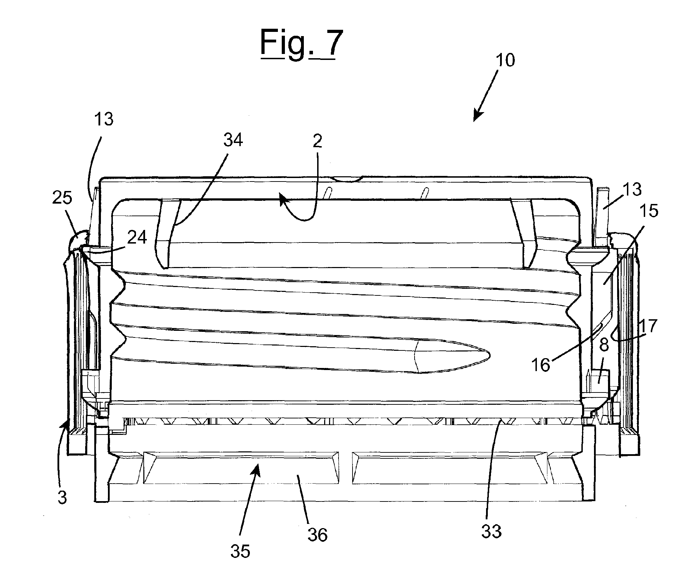

Figure 7 illustrates a subsequent position of the outer body 3, in which the shoulder 25 has just got past the annular ridge 24 and is at the height of the fins 13.

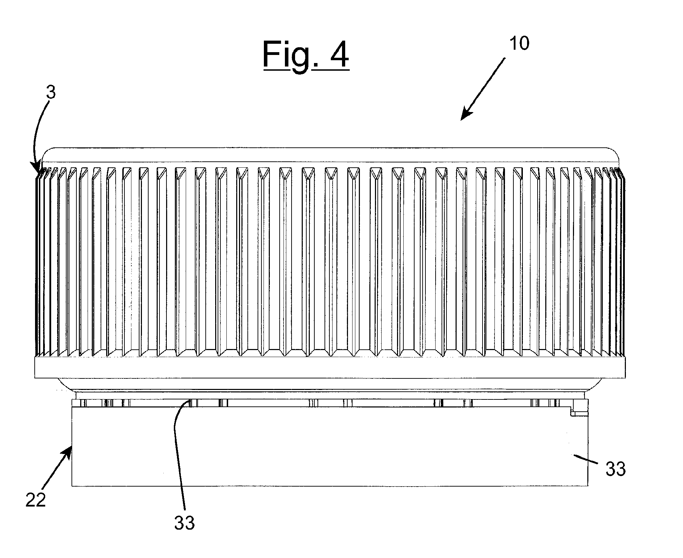

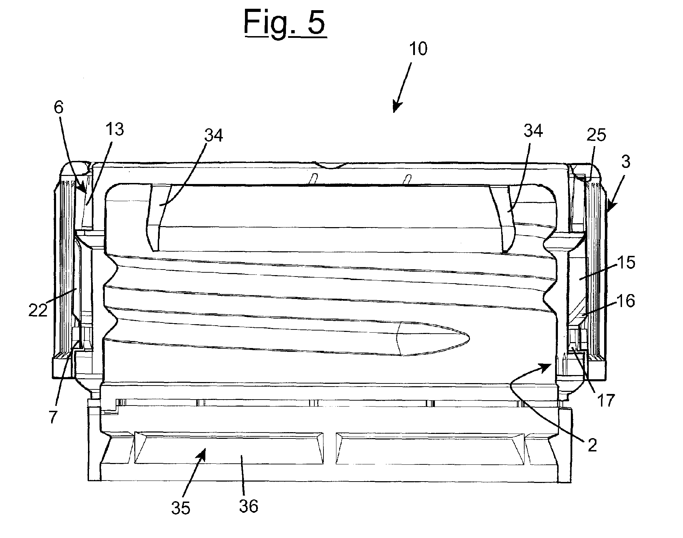

The final position of the outer body 3, with respect to the inner body 2, is that shown in figures 4 and 5 in which the fins 13 abut below the shoulder 25.

A second embodiment of the cap does not have the bridges 4, but in any case in the moulding step the outer body 3 and the inner body 2 are assembled directly during removal from the mould by the thrusting action exerted on the outer body 3 and/or on the inner body 2 by a mobile element (the bushing) of the mould.

From the description that has been made the characteristics of the cap and of the process for making it according to the present invention are clear, just as the relative advantages are also clear, including:
- elimination of the assembly operation of the parts;
- elimination of at least one mould;
- simplicity of construction;
- relatively low manufacturing costs.

Finally, it is clear that the cap and the process for making it thus conceived can undergo numerous modifications and variations, all of which are covered by the invention; moreover, all of the details can be replaced with technically equivalent elements. In practice, the materials used, as well as the sizes, can be whatever according to the technical requirements.

## Claims

1. Cap (10) equipped with an anti-rotation security device (11) comprising at least one inner body (2) and at least one outer body (3) suitable for being at least partially fitted concentrically one on top of the other **characterised in that** said at least one inner body (2) and said at least one outer body (3) are made in a single mould and assembled directly during removal from the mould by the thrusting action exerted on said outer body (3) and/or on said inner body (2) by a mobile element of said mould.

2. Cap (10) according to claim 1, **characterised in that** said at least one inner body (2) and said at least one outer body (3) are moulded in one piece.

3. Cap (10) according to claim 1, **characterised in that** it comprises at least two connection bridges (4) between said inner body (2) and said outer body (3) suitable for tearing when said cap (10) is removed from the mould.

4. Cap (10) according to claim 1, **characterised in that** said outer body (3) is automatically fitted and assembled, during the removal of the cap (10) from the mould, onto said inner body (2), after said connection bridges (4) have been torn.

5. Cap (10) according to claim 1, **characterised in that** it comprises stop means (5) to avoid said outer body (3) slipping away from the said inner body (2), once assembled.

6. Cap (10) according to claim 5, **characterised in that** said stop means (5) comprise a plurality of fins (15) arranged on the outer side wall (18) of said inner body (2) suitable for interacting with an annular ridge (21) foreseen on the inner wall (17) of said outer body (3) to prevent said outer body (3) slipping away from said inner body (2).

7. Cap (10) according to claim 6, **characterised in that** said fins (15) comprise at least one tapered portion (16) suitable for making it easier to correctly position said outer body (3) on said inner body (2), during the removal of the cap (10) from the mould.

8. Cap (10) according to claim 1, **characterised in that** said stop means (5) also comprise a plurality of second fins (22) arranged on the inner side wall (17) of said outer body (3) suitable for interacting with an annular ridge (24) foreseen on the outer wall of said inner body to prevent said outer body (3) slipping away from said inner body (2).

9. Cap (10) according to any one of the previous claims, **characterised in that** said anti-rotation security device (11) comprises a plurality of first teeth (7) arranged on said outer body (3) and a plurality of second teeth (8) arranged on the inner body (2) and elastic means (6) to take said first teeth (7) away from said second teeth (8) .

10. Cap (10) according to claim 9 **characterised in that**, once assembled, the outer body (3) can slide on the inner body (2) between a rotation position of said cap in which the first teeth (7) are engaged with the second teeth (8) and a rotation-blocking position in which said first teeth (7) are disengaged from the second teeth (8) .

11. Cap (10) according to any one of the previous claims **characterised in that** said elastic means (6) comprise a plurality of inclined fins (13) arranged along a circumference (24) about said inner body (2) suitable for abutting against an inner shoulder (25) of said outer body (3).

12. Cap (10) according to any one of the previous claims 8 to 11, **characterised in that** said fins (15) are inclined in the radial direction to allow the joint rotation of the outer body and of the inner body in one direction and just the idle rotation of the outer body (3) on the inner body (2) in the opposite direction, interacting with the fins (22).

13. Cap (10) according to any one of the previous claims, **characterised in that** said inner body (2) comprises a tamper-proof band and engagement means for the finish or annular rib of a bottle or flask to fix said cap (10) with the finish or annular rib of the bottle or flask.

14. Cap (10) according to any one of the previous claims, **characterised in that** said inner body (2) comprises an upper sealing inner annular element or tige (34).

15. Cap (10) according to any one of the previous claims, **characterised in that** said inner body (2) comprises a threading (30) suitable for engaging with a corresponding threading of the neck of the flask or of the bottle to open it or close it.

16. Process for making a cap (10) according to any one of the previous claims 1 to 15 comprising the steps of:
- moulding;
- removal of the moulded cap (10); **characterised in that** in the moulding step the outer body (3) and the inner body (2) are made in a single mould and assembled directly during removal from the mould by the thrusting action exerted on said outer body (3) and/or on said inner body (2) by a mobile element of said mould.

17. Process for making a cap (10) according to claim 15, **characterised in that** in the moulding step said outer body (3) and said inner body (2) are moulded in one piece.

18. Process for making a cap (10) according to claim 15, **characterised in that** in the removal step of the cap (10) from the mould said bridges (4) are broken and said outer body (3) is fitted and assembled onto said inner body (2) automatically.
